# FASCICULE DE BREVET EUROPEEN

(11) **EP 2 655 121 B1**
(45) Date de publication et mention de la délivrance du brevet: **18.05.2016**
(21) Numéro de dépôt: 11757326.1
(22) Date de dépôt: 15.09.2011
(51) Int. Cl.: B60L 7/18, B60L 11/00, B60L 11/18, H02J 1/14, H02J 7/34, H02J 3/28, H02J 3/32, B60L 9/00

(54) **MÉTHODE DE RÉGLAGE DE PUISSANCE ABSORBÉE PAR AU MOINS UN VÉHICULE ALIMENTÉ ÉLECTRIQUEMENT**
VERFAHREN ZUM EINSTELLEN DER VON MINDESTENS EINEM ELEKTROFAHRZEUG ABSORBIERTEN LEISTUNG
METHOD OF ADJUSTING POWER ABSORBED BY AT LEAST ONE ELECTRICALLY POWERED VEHICLE

(30) Priorité: 23.12.2010 EP 10290675
(43) Date de publication de la demande: 30.10.2013
(73) Titulaire: Siemens S.A.S., 93527 Saint-Denis Cedex (FR)
(72) Inventeur: CHATTOT, Eric, F-92190 Meudonfr (FR); EL FASSI, Said, F-91270 Vigneux sur Seine (FR); BAVARD, Xavier, F-62123 Bailleulval (FR); VERHILLE, Jean-Noël, F-62590 Oignies (FR)
(74) Mandataire: Maier, Daniel Oliver
(86) Numéro de dépôt international: PCT/EP2011/066037
(87) Numéro de publication internationale: WO 2012/084282

(56) Documents cités:
- EP-A1- 1 359 049
- WO-A1-2005/082666
- WO-A1-2009/153416
- REINER K: "EINSATZMOGLICHKEITEN FUR ENERGIESPEICHER IM ELEKTRISCHEN BAHNBETRIEB", ELEKTRISCHE BAHNEN, OLDENBOURG INDUSTRIEVERLAG, MUNCHEN, DE, vol. 91, no. 10, 1 octobre 1993 (1993-10-01), pages 331-335, XP000398565, ISSN: 0013-5437

## Description

La présente invention concerne principalement une méthode de réglage de puissance absorbée par au moins un véhicule alimenté électriquement selon le préambule de la revendication 1 et un calculateur associé.

Les systèmes d'alimentation d'énergie de traction d'une ligne de métro ou autres formes de transport public (tram, trolley, bus guidés, trains, véhicules autoguidés (sans chauffeur), etc.) subissent des fluctuations énergétiques qui dépendent principalement du nombre de véhicules en ligne ainsi que de leur synchronisme. La consommation énergétique, qui croît avec le nombre de véhicules, n'est pas constante et dépend fortement des phases de fonctionnement (accélération, palier de vitesse, ralentissement) des véhicules. Ces variations rapides en énergie sont à l'origine de crêtes de puissance délivrées par des installations fixes. Ces crêtes de puissance ont une action prépondérante sur la qualité de la distribution d'énergie de la ligne, mais également sur des pertes en ligne qui augmentent et qui affectent le rendement énergétique global d'un réseau de transport public. Il est également à noter que, dans de nombreux cas, cesdites crêtes engendrent des pénalités contractuelles avec un fournisseur d'énergie.

En prenant l'exemple d'une ligne de métro, le dimensionnement des installations de distribution d'énergie de la ligne, calculé pour la capacité maximale du nombre de véhicules, autorise l'exploitation de la ligne dans tous les modes de fonctionnement (heures de pointe et heures creuses). Le dimensionnement desdites installations doit tenir compte des crêtes de puissance de façon à garantir la disponibilité et la fiabilité du réseau de transport. Pour remédier à la baisse de la qualité de la distribution de l'énergie par les rails d'alimentation, des alimentations (« feeders ») sont généralement installées pontuellement en long de ligne pour limiter de trop fortes chutes de tension ainsi que des pertes en ligne. En ce qui concerne un engagement contractuel avec le fournisseur d'énergie, deux solutions existent actuellement afin de palier aux problèmes précités:
1) abonnement surdimensionné auprès du fournisseur, mais plus cher
2) abonnement dimensionné au plus juste auprès du fournisseur, mais pénalité applicable en cas de dépassement de puissance.

Ces impératifs contractuels, face aux obligations de performance constituent un dilemme difficile à résoudre. Dans les deux cas, des surconsommations ont lieu et présentent donc aussi un désavantage environemental certain quant à des mesures globales de réduction en besoin énergétique.

On note le document WO 2009/153416 A1 (SIEMENS TRANSPORTATION SYSTEMS SAS) du 23 décembre 2009 décrivant le préambule de la revendication 1 où un système de transport pour lequel le réseau d'alimentation est régulé à une puissance moyenne en fonction du trafic et pour lequel une unité de stockage au sol fournit une puissance crête au dit réseau.

Un but de la présente invention est de proposer une méthode visant à minimiser de fortes crêtes en puissance absorbée lors d'appel de courant d'au moins un véhicule. Dans la même visée, il s'agit de plus de pouvoir respecter un cadre de consommation respectueux des conditions d'un fournisseur d'énergie et donc aussi de l'environnement en évitant des surconsommations énergétiques.

Une telle méthode est présentée au travers des caractéristiques de la revendication 1.

A partir d'une méthode de réglage de puissance absorbée par au moins un véhicule alimenté par au moins :
- une unité de stockage d'énergie électrique,
- un réseau électrique au sol fournissant au véhicule au moins un courant d'appel utile au démarrage du véhicule, l'invention prévoit que avant et au moins pendant le démarrage du véhicule, le courant d'appel est réglé à une valeur moyenne constante et des variations dudit courant d'appel autour de la valeur moyenne sont maintenues minimales en commandant au moins un apport variable de compensation d'énergie de l'unité de stockage d'énergie audit véhicule

La valeur moyenne constante est dimensionnée sous un seuil maximal de consommation autorisé par un fournisseur. Tout appel de courant nécessitant un dépassement de ce seuil tel que sous forme d'une crête de puissance est ainsi avantageusement compensé par l'apport variable énergétique apte à fournir de l'énergie au véhicule en toute indépendance du réseau électrique lié au fournisseur. Il en ressort que des conditions contractuelles et physiques d'un fournisseur sont respectées et en adaptant le seuil à rester dans sous un palier minimal en maximisant l'apport variable, des économies énergétiques sont ainsi profitables pour un gérant de transport public ainsi que pour l'environnement.

Un ensemble de sous-revendications présente également des avantages de l'invention.

Il existe plusieurs moyens avantageux de mettre en oeuvre la méthode selon l'invention qui peuvent être utilisés dynamiquement en combinaison linéaire en fonction de leur état de stockage énergétique instantané. Parmi eux :
- l'unité de stockage d'énergie délivre de l'énergie depuis une structure au sol vers le véhicule : il s'agit par exemple de régler l'apport variable requis en complément du courant d'appel constant délivré par le fournisseur au moyen d'unités de stockage d'énergie en station par exemple munie de super-condensateurs ou autre batteries rechargeables (aux heures creuses).
- l'unité de stockage d'énergie est embarquée dans au moins un véhicule : il est en effet possible de libérer l'apport variable d'énergie si un surplus d'énergie est stocké par exemple dans une super-capacité ou une batterie embarquée. En effet, il est aussi connu que beaucoup de types de véhicule comportent de nos jours un dispositif de stockage embarqué (bus, tramway, métro, etc.) et cette caractéristique rend avantageusement applicable la méthode selon l'invention par délivrance d'énergie du véhicule même.

Idéalement, l'unité de stockage d'énergie stocke et délivre de l'énergie au moyen d'un élément capacitif de forte puissance tel qu'au moins un super-condensateur. Ce type de stockage est parfaitement bien adapté pour délivrer une énergie sous forme de puissance en crête et a l'avantage d'être aussi rechargeable sur une courte durée et une forte puissance, mais aussi sur une plus longue durée sans ainsi requérir une forte puissance donc en phase d'heures creuses où la consommation possible d'énergie pour la recharge (par exemple du réseau fournisseur) peut être plus économique.

Aussi, l'unité de stockage d'énergie est rechargeable par récupération d'énergie provenant au moins d'une des sources suivantes :
- du véhicule, idéalement pendant son freinage ;
- du réseau électrique au sol, hors d'une phase de démarrage du véhicule, idéalement en heures creuses de trafic.

Cette recharge ainsi prédictive est donc prévue afin de pouvoir palier à des appels ultérieurs de courant très fort, sujets à des crêtes de puissance.

Afin de pouvoir déterminer la valeur moyenne constante requise ainsi que l'apport variable d'énergie associé et disponible, l'unité de stockage d'énergie est avantageusement commandée par un algorithme de dimensionnement (sous forme d'un calculateur) en besoin énergétique prenant en compte un schéma de trafic d'une pluralité de véhicules, la valeur moyenne du courant d'appel aussi minimale que possible et les ressources en apport variable d'énergie et, si disponible, un groupe d'unités complémentaires de stockage d'énergie, ce groupe étant bien entendu idéalement découplé d'un apport simultané du fournisseur.

A titre d'exemple fort avantageux, le groupe d'unités complémentaires de stockage d'énergie peut comprendre un nombre adaptable d'unités de stockage embarquées dans des véhicules à l'arrêt ou même stationnés dans une zone de garage/maintenance/livraison, en particulier à des heures creuses de trafic. Ces unités « passives vis-à-vis du trafic » permettent ainsi de fournir au moins une contribution pour l'apport variable d'énergie (contre des crêtes de puissance) requis au réseau de transport public « actif » (via les rails/caténaires).

Ledit algorithme de dimensionnement suit idéalement une logique de minimisation de pic de puissance en provenance du réseau électrique au sol en compensant lesdits pics par les apports variables énergétiques distribués par au moins une unité de stockage d'énergie, en particulier lors du démarrage de véhicules. Selon ce principe, l'algorithme de dimensionnement suit une logique de minimisation de la valeur moyenne du courant d'appel, du moins pour maintenir ladite valeur égale ou inférieure à un seuil-cible de consommation énergétique accordé par un distributeur du réseau électrique au sol. Plus l'algorithme détecte de sources susceptibles de contribuer à maximiser l'apport variable, plus il réussira à avantageusement minimiser le seuil-cible de la valeur moyenne du courant d'appel sujet à une ou des crêtes de puissance subites. Enfin, l'invention prévoit un calculateur pour la mise en oeuvre de la méthode comprenant un module de détermination du courant d'appel autour d'une valeur moyenne imposée par le réseau électrique au sol et un module de commande des variations imposées aux niveaux de stockage et de délivrance d'énergie d'au moins une unité de stockage d'énergie afin de pouvoir réguler l'apport variable potentiellement disponible contre une prévision de crête de puissance attendue. Ce calculateur est un support idéal pour exécuter l'algorithme de dimensionnement précité aboutissant à la compensation des crêtes de puissance requise tout en limitant l'appel de courant à une valeur seuil acceptable.

Il est possible de prévoir que le module de détermination et le module de commande sont embarqués, en particulier dans des applications de transports publics dont les véhicules disposent de moyens de communications propres et interagissant entre eux ou/et via un réseau de communication au sol. Ainsi, un groupe de véhicule d'une ligne de métro ayant une ressource disponible d'énergie embarquée peut ainsi répondre à l'apport variable utile lors d'un appel de courant d'un des véhicules. Lors de période libres de crêtes fréquentes en puissance, lesdits véhicules tâchent de recharger (autonomement ou depuis le réseau fournisseur sous respect de la consommation maximale autorisée) leur unité de stockage embarquée afin de pouvoir prévoir un prochain appel de courant sujet à crête. Pour profiter de toute ressource disponible véhicule/sol et permettre de transmettre des commandes de recharge/décharge, le calculateur peut donc être simplement relié à une interface de communication entre sol et véhicule.

Pour la mise en oeuvre de la méthode selon l'invention, des systèmes de stockage d'énergie par super-condensateurs représentent aujourd'hui des solutions très prometteuses, non seulement comme éléments complémentaires aux sous-stations non réversibles, mais également comme compensateurs actifs des chutes de tension, génératrices de pointes de courant, aux points sensibles des réseaux d'alimentation.

Une première approche pour un tel système est ainsi de disposer, aux endroits sensibles de la ligne (généralement en bout de ligne), une sous-station à base de stockage énergétique, pour compenser des chutes de tension ohmiques (caractéristiques des systèmes d'alimentation à courant continu) et assurer une récupération du freinage électrique des véhicules dans tous modes de fonctionnement (aussi en heures creuses). Cette solution a ainsi pour principal avantage de faire supporter des pics de courant aux unités de stockage du sol. Il en résulte alors un redimensionnement de l'alimentation sol (transformateur et redresseur) adapté à une puissance moyenne. Ce type de solution, bien qu'en améliorant les performances globales de la ligne en particulier sur le freinage électrique, n'empêche toutefois pas les appels de courant liés à la mise en vitesse des véhicules. Les chutes de tension dans les barres d'alimentation de la ligne qu'ils induisent peuvent alors être à l'origine de l'installation d'une ou plusieurs dispositifs intégrant des unités de stockage au sol afin de contrôler la tension délivrée par les rails de distribution en différents points sensibles de la ligne.

La seconde approche pour un tel système, qui comporte des unités de stockage embarquées, peut sembler complémentaire à la première approche, mais elle apparaît toutefois plus attractive à plusieurs égards. Par sa capacité de stockage embarquée (stockage « d'énergie » est sous-entendu), elle présente l'avantage de fournir le complément énergétique inhérent à la phase de la mise en vitesse d'une rame d'unités de métro par exemple. Dans ces conditions, des pics de courant ne sont alors plus supportés par des rails de distribution mais par des équipements de gestion des unités de stockage embarquées. Des chutes de tension dans les rails de distributions sont alors réduites et l'ajout de feeders n'est alors plus indispensable. Un autre aspect est relatif à une indépendance énergétique induite par des équipements de stockage embarqués, ce que ne permet pas la première approche. Chaque ressource de stockage embarqué, dédié aux équipements de traction du véhicule, fournit alors l'énergie complémentaire liée à chaque mise en vitesse du véhicule ce qui n'exclut en aucune façon la possibilité de fournir de l'énergie à un autre véhicule. Dans le premier cas (stockage au sol), l'exploitation de N véhicules peut être à l'origine d'un pic de courant égal à N fois celui d'un véhicule, pour autant que les véhicules soient synchronisés. Dans la seconde approche, les pics de courant supportés par la ligne n'existent pas, quelque soit le nombre de véhicules en ligne (en synchronisme ou pas) ce qui est très avantageux pour le dimensionnement et les performances du système. Le dimensionnement des équipements du sol s'effectue alors sur la base d'une consommation moyenne multipliée par le nombre de véhicules.

Les dispositifs de stockage embarqués comprennent des convertisseurs électriques et procurent de fait, une grande flexibilité de manoeuvre. Différentes stratégies de commande peuvent être mises en place afin d'optimiser la consommation énergétique de chaque véhicule et donc de supprimer les crêtes de puissance supportées par les installations fixes. Dans ces conditions, les pertes en ligne sont considérablement réduites et ne nécessitent plus l'ajout de feeders. Un autre aspect est relatif au maintien de la tension des rails d'alimentation qui, par la suppression des pics de courant, permet d'obtenir des performances améliorées. Toutes ces raisons conduisent à ne plus sur-dimensionner les installations de fourniture de l'énergie. La suppression des crêtes de puissance s'appuie sur un algorithme de dimensionnement et de commande des unités de stockage embarquées qui, pour chaque inter-station, impose une puissance absorbée constante en cas d'appel de courant. Les unités de stockage embarquées pourvoient dès lors au complément énergétique (apport variable régulé) afin de satisfaire les phases de fonctionnement liées au parcours du véhicule (accélération, palier de vitesse et ralentissement) et qui requièrent une puissance instantanée fluctuante.

Des exemples de réalisation et d'application sont fournis à l'aide de figures décrites :
- Figures 1A, 1B: Exemple de crête de puissance de l'état de l'art,
- Figures 2A, 2B, 2C, 2D: Exemple de mise en oeuvre de la méthode selon l'invention.

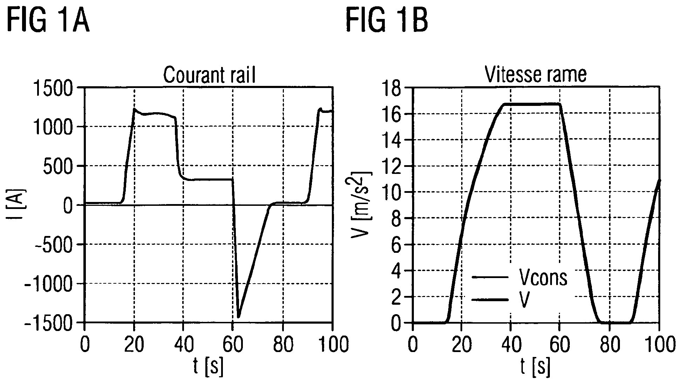

La figure 1A présente un profil de courant I(A) requis et absorbé par un véhicule se déplaçant en fonction du temps t(s). la figure 1B présente un profil associé de vitesse V(m/s) dudit véhicule en fonction du temps t(s). La méthode selon l'invention n'a pas été appliquée à ces deux simulations.

Les résultats de ces deux simulations illustrent bien l'appel de courant que doit délivrer une sous-station (Fig. 1.a). Cet appel existe pendant toute la phase de mise en vitesse du véhicule (principalement au démarrage du véhicule entre t=0s et t=40s). Des équipements d'apport énergétiques de sous-stations doivent être dimensionnés pour supporter ce type de surcharge sachant que plusieurs véhicules peuvent démarrer en même temps. Cet appel de courant est par ailleurs néfaste à la qualité de la distribution de l'énergie, car il induit des chutes de tension dans les barres de distribution. En conclusion, les appels de courant nécessitent un surdimensionnement des installations (sous-stations) ainsi que la mise en place de feeders éventuels lorsque les chutes de tension dans les barres de distribution sont trop importantes. Ces deux aspects augmentent ainsi les coûts d'installation et de gestion d'une ligne de transport public.

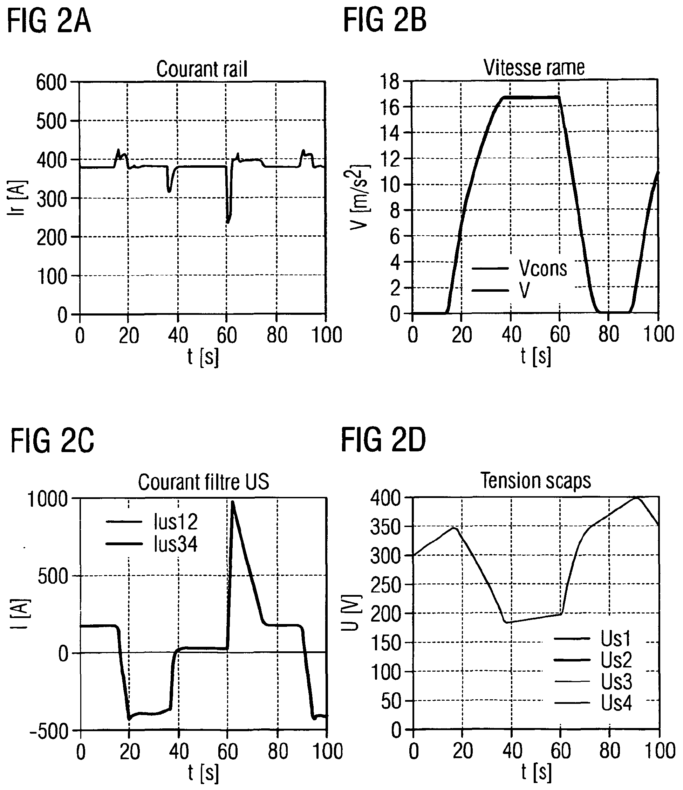

La figure 2A présente un profil de courant I(A) requis et absorbé par le même véhicule se déplaçant en fonction du temps t(s). la figure 1B présente un profil associé de vitesse V(m/s) dudit véhicule en fonction du temps t(s). La méthode selon l'invention a été appliquée à ce jeu de nouvelles simulations. Pour l'illustrer, la figure 2C présente la contribution sous forme d'apport variable d'énergie (additionnellement à la valeur moyenne constante - environ 385 A - de la figure 2A) provenant de l'unité de stockage d'énergie (ici embarquée comme un super-condensateur). Pour rappel, un courant négatif signifie la fourniture de l'énergie de l'unité de stockage embarquée (entre t= 18 et 40s); un courant positif atteste de la recharge des unités de stockage embarquées (entre t=0 et 18s et entre t=60 et 70s).

La simulation montre que le courant délivré par des rails d'alimentation (Fig.2A) est, au régime transitoire près, constant (385 A). Les besoins liés à une propulsion du véhicule (Fig. 2B) sont pourvus, en complément de ceux délivrés par les rails (réseau fournisseur), par les unités de stockage embarquées (Fig.2C). La mise en vitesse (démarrage) du véhicule s'accompagne d'un appel de courant qui, cette fois, est supporté par les unités de stockages embarquées (Fig.2C, entre t=18 et 40s). L'algorithme de calcul imposant un appel de courant de réglage à valeur moyenne fixe absorbé par le véhicule (courant rails / fournisseur), il en découle un courant additif variable supporté par les unités de stockage embarquées. Dans ces conditions, le dimensionnement des sous-stations ne nécessitent plus la prise en compte d'appel de courant (courant constant dans les rails). De la même façon, l'installation éventuelle de feeders n'est plus nécessaire au bon fonctionnement du système. La Figure 1D représente enfin une tension (« scaps ») d'une unité de stockage embarquée fournissant l'apport variable d'énergie.

## Revendications

1. Méthode de réglage de puissance absorbée par au moins un véhicule alimenté par au moins :
- une unité de stockage d'énergie électrique,
- un réseau électrique au sol fournissant au véhicule au moins un courant d'appel utile au démarrage du véhicule, **caractérisée en ce que**
- l'unité de stockage d'énergie électrique est embarquée dans au moins le dit véhicule,
- avant et au moins pendant le démarrage du véhicule, le courant d'appel est réglé à une valeur moyenne constante et des variations dudit courant d'appel autour de la valeur moyenne sont maintenues minimales en commandant au moins un apport variable de compensation d'énergie de l'unité de stockage d'énergie audit véhicule.

2. Méthode selon revendication 1, pour laquelle l'unité de stockage d'énergie délivre de l'énergie depuis une structure au sol vers le véhicule.

3. Méthode selon une des revendications précédentes, pour laquelle l'unité de stockage d'énergie est rechargeable par récupération d'énergie provenant au moins d'une des sources suivantes :
- du véhicule, idéalement pendant son freinage ;
- du réseau électrique au sol, hors d'une phase de démarrage du véhicule.

4. Méthode selon une des revendications précédentes, pour laquelle l'unité de stockage d'énergie stocke et délivre de l'énergie au moyen d'un élément capacitif de forte puissance tel qu'au moins un super-condensateur.

5. Méthode selon une des revendications précédentes, pour laquelle l'unité de stockage d'énergie est commandée par un algorithme de dimensionnement en besoin énergétique prenant en compte un schéma de trafic d'une pluralité de véhicules, la valeur moyenne du courant d'appel et, si disponible, un groupe d'unités complémentaires de stockage d'énergie

6. Méthode selon revendication 5, pour laquelle le groupe d'unités complémentaires de stockage d'énergie comprend un nombre adaptable d'unités de stockage embarquées dans des véhicules à l'arrêt ou stationnés dans une zone de garage, en particulier à des heures creuses de trafic.

7. Méthode selon revendication 5 ou 6, pour laquelle l'algorithme de dimensionnement suit une logique de minimisation de pic de puissance en provenance du réseau électrique au sol en compensant lesdits pics par des apports énergétiques distribués par au moins une unité de stockage d'énergie, en particulier lors du démarrage de véhicules.

8. Méthode selon revendication 5 ou 6, pour laquelle l'algorithme de dimensionnement suit une logique de minimisation de la valeur moyenne du courant d'appel, du moins pour maintenir ladite valeur égale ou inférieure à un seuil-cible de consommation énergétique accordé par un distributeur du réseau électrique au sol.

9. Calculateur pour la mise en oeuvre de la méthode selon une des revendications précédentes comprenant un module de détermination du courant d'appel autour d'une valeur moyenne imposée par le réseau électrique au sol et un module de commande des variations imposées aux niveaux de stockage et de délivrance d'énergie d'au moins une unité de stockage d'énergie.

10. Calculateur selon revendication 9, pour lequel le module de détermination et le module de commande sont embarqués.

11. Calculateur selon revendication 9 ou 10, relié à une interface de communication entre sol et véhicule.

## Patentansprüche

1. Verfahren zur Regelung der Leistung, die von wenigstens einem Fahrzeug aufgenommen wird, das gespeist wird von wenigstens:
- einer elektrischen Energiespeichereinheit,
- einem Stromnetz am Boden, welches dem Fahrzeug wenigstens einen Einschaltstrom liefert, der beim Anfahren des Fahrzeugs von Nutzen ist,
**dadurch gekennzeichnet, dass**
- sich die elektrische Energiespeichereinheit an Bord wenigstens dieses Fahrzeugs befindet,
- vor und wenigstens während des Anfahrens des Fahrzeugs der Einschaltstrom auf einen konstanten Mittelwert geregelt wird und Schwankungen dieses Einschaltstroms um den Mittelwert minimal gehalten werden, indem wenigstens eine variable Zufuhr von Energie zur Kompensation von der Energiespeichereinheit zum Fahrzeug gesteuert wird.

2. Verfahren nach Anspruch 1, wobei die Energiespeichereinheit Energie von einer Struktur am Boden aus an das Fahrzeug abgibt.

3. Verfahren nach einem der vorhergehenden Ansprüche, wobei die Energiespeichereinheit durch Rückgewinnung von Energie wiederaufladbar ist, die von wenigstens einer der folgenden Quellen stammt:
- vom Fahrzeug, idealerweise während seiner Bremsung;
- vom Stromnetz am Boden außerhalb einer Anfahrphase des Fahrzeugs.

4. Verfahren nach einem der vorhergehenden Ansprüche, wobei die Energiespeichereinheit Energie mittels eines kapazitiven Elements von hoher Leistung, wie etwa wenigstens eines Superkondensators, speichert und abgibt.

5. Verfahren nach einem der vorhergehenden Ansprüche, wobei die Energiespeichereinheit durch einen Algorithmus zur Dimensionierung hinsichtlich des Energiebedarfs gesteuert wird, welcher ein Schema des Verkehrs einer Vielzahl von Fahrzeugen, den Mittelwert des Einschaltstroms und, falls verfügbar, eine Gruppe von ergänzenden Energiespeichereinheiten berücksichtigt.

6. Verfahren nach Anspruch 5, wobei die Gruppe von ergänzenden Energiespeichereinheiten eine anpassbare Anzahl von Speichereinheiten umfasst, die sich an Bord von Fahrzeugen befinden, die halten oder in einem Abstellbereich geparkt sind, insbesondere in Schwachverkehrszeiten.

7. Verfahren nach Anspruch 5 oder 6, wobei der Algorithmus zur Dimensionierung einer Logik der Minimierung der vom Stromnetz am Boden stammenden Leistungsspitze folgt, indem diese Spitzen durch Energiezufuhren kompensiert werden, die von wenigstens einer Energiespeichereinheit verteilt werden, insbesondere während des Anfahrens von Fahrzeugen.

8. Verfahren nach Anspruch 5 oder 6, wobei der Algorithmus zur Dimensionierung einer Logik der Minimierung des Mittelwertes des Einschaltstroms folgt, wenigstens um diesen Wert gleich einem oder kleiner als einen Zielschwellenwert des Energieverbrauchs zu halten, der von einem Verteiler des Stromnetzes am Boden vorgegeben wird.

9. Rechner für die Durchführung des Verfahrens nach einem der vorhergehenden Ansprüche, welcher ein Modul zur Bestimmung des Einschaltstroms um einen Mittelwert herum, der von dem Stromnetz am Boden vorgegeben wird, und ein Modul zur Steuerung der Änderungen, die an den Niveaus der Speicherung und Abgabe von Energie wenigstens einer Energiespeichereinheit vorgenommen werden müssen, umfasst.

10. Rechner nach Anspruch 9, wobei sich das Modul zur Bestimmung und das Modul zur Steuerung an Bord befinden.

11. Rechner nach Anspruch 9 oder 10, der mit einer Schnittstelle zur Kommunikation zwischen Boden und Fahrzeug verbunden ist.

## Claims

1. Method of adjusting power absorbed by at least one vehicle, powered by at least:
- one electrical energy storage unit,
- one electrical network on the ground, providing the vehicle with at least one inrush current necessary for starting up the vehicle,
**characterised in that**
- the electrical energy storage unit is installed on at least said vehicle,
- before and at least during the starting-up of the vehicle, the inrush current is adjusted to a constant mean value and variations of said inrush current around the mean value are kept to a minimum by controlling at least one variable supply of compensating energy from the energy storage unit of said vehicle.

2. Method according to claim 1, in which the energy storage unit delivers energy to the vehicle from a structure on the ground.

3. Method according to one of the preceding claims, in which the energy storage unit is able to be recharged by recovering energy from at least one of the following sources:
- the vehicle, ideally during the braking thereof;
- the electrical network on the ground, outside a starting-up phase of the vehicle.

4. Method according to one of the preceding claims, in which the energy storage unit stores and delivers energy by means of an element of high capacitance, such as at least one supercapacitor.

5. Method according to one of the preceding claims, in which the energy storage unit is controlled by an algorithm for dimensioning the energy requirement, taking into account a traffic plan for a plurality of vehicles, the mean value of the inrush current and, if available, a set of complementary energy storage units.

6. Method according to claim 5, in which the set of complementary energy storage units comprises a flexible number of storage units installed in vehicles which are stationary or parked in a garage area, in particular during off-peak traffic hours.

7. Method according to claim 5 or 6, in which the dimensioning algorithm follows a logic to minimise a power surge from the electrical network on the ground, by compensating for said surges by the supply of energy distributed by at least one energy storage unit, in particular when starting up vehicles.

8. Method according to claim 5 or 6, in which the dimensioning algorithm follows a logic for minimising the mean value of the inrush current, at least to maintain said value equal to or less than a target threshold for energy consumption set by a distributor of the electrical network on the ground.

9. Computer for implementing the method according to one of the preceding claims, comprising a module for determining the inrush current around a mean value imposed by the electrical network on the ground and a module for controlling the variations set for the levels for storage and for delivery of energy from at least one energy storage unit.

10. Computer according to claim 9, in which the module for determining and the module for controlling are installed.

11. Computer according to claim 9 or 10, connected to an interface for communication between the ground and the vehicle.
